(19) Europäisches Patentamt
European Patent Office
Office européen des brevets

(11) **EP 4 737 410 A1**

(12) **EUROPÄISCHE PATENTANMELDUNG**

(43) Veröffentlichungstag:
**06.05.2026 Patentblatt 2026/19**

(21) Anmeldenummer: **24210179.8**

(22) Anmeldetag: **31.10.2024**

(51) Internationale Patentklassifikation (IPC):
**C03C 14/00** (2006.01) **C03B 19/06** (2006.01)

(52) Gemeinsame Patentklassifikation (CPC):
**C03C 14/004; C03B 19/066;** C03C 2214/16

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Heraeus Quarzglas GmbH & Co. KG**
**63450 Hanau (DE)**

(72) Erfinder:
• **GÖTZENDORFER, Andreas**
**63450 Hanau (DE)**

• **TSCHOLITSCH, Nadine**
**63450 Hanau (DE)**
• **HAMMERSCHMIDT, Jörg**
**63450 Hanau (DE)**
• **JENEK, Torsten**
**63450 Hanau (DE)**
• **WESSELY, Frank**
**63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(54) **OPAKES QUARZGLAS MIT HOHER ABSORPTION IM INFRAROTBEREICH**

(57) Beschrieben wird ein opakes Quarzglas hoher Absorption im nahen Infrarotbereich, sowie ein Verfahren zu dessen Herstellung. Ein weiterer Gegenstand der vorliegenden Erfindung ist die Verwendung des erfindungsgemäßen opakem Quarzglases bzw. des aus dem erfindungsgemäßen Verfahren resultierenden opakem Quarzglases in Prozesskammern, in denen Halbleiterwafer verarbeitet werden.

Abbildung 5

Visible and IR absorption of a 3mm dics calulated ( 1-reflection-transmission)

EP 4 737 410 A1

**Beschreibung**

Die Erfindung betrifft ein opakes Quarzglas hoher Absorption im infraroten Wellenlängenbereich von 1 bis 10 $\mu$m, sowie ein Verfahren zu dessen Herstellung. Ein weiterer Gegenstand der vorliegenden Erfindung ist die Verwendung des erfindungsgemäßen opakem Quarzglases bzw. des aus dem erfindungsgemäßen Verfahren resultierenden opakem Quarzglas in Prozesskammern, in denen Halbleiterwafer verarbeitet werden.

Bei der Herstellung von Halbleiterbauelementen und optischen Anzeigen werden eine Vielzahl von Geräten wie Reaktoren, Apparate, Trägerplatten, Glocken, Tiegel, Schutzschilde oder einfachere Bauteile wie Rohre, Stäbe, Platten, Flansche, Ringe oder Blöcke verwendet. Sie müssen hohen Anforderungen genügen in Bezug auf Reinheit, chemische und thermische Stabilität und mechanische Festigkeit. Sie können z.B. aus Edelstahl bestehen, werden aber zunehmend aus Quarzglas hergestellt. Der Grund dafür ist, dass sich das Siliziumdioxidmaterial bei hoher Reinheit gegenüber den üblichen Halbleitermaterialien inert verhält. Quarzglas zeichnet sich darüber hinaus durch eine hohe chemische Stabilität gegenüber zahlreichen Prozessmedien sowie durch eine hohe Temperaturwechselbeständigkeit aus.

Manche Komponenten in Prozesskammern, in denen Halbleiterwafer bei hohen Temperaturen verarbeitet werden, werden mittels Strahlung von Lampen beheizt. Um eine schnelle und effiziente Wärmeübertragung zu gewährleisten, muss das hierfür verwendete Material eine hohe Absorption, insbesondere im nahen Infrarot d.h. im Bereich von 1 bis 3 $\mu$m, aufweisen. Da die Komponenten zudem eine geringe thermische Masse aufweisen sollen, um schnelle thermische Zyklen des Erwärmens und Abkühlens zu ermöglichen, muss eine hohe Absorption schon bei geringer Dicke bzw. Wandstärke der Bauteile erreicht werden. Da die Prozesssteuerung schwierig ist, wenn die Absorption des Materials stark von der Temperatur abhängt, ist es von Vorteil, wenn die Absorption in möglichst geringem Maße von der Temperatur abhängt. Diese (infrarot-)optischen Eigenschaften sollen mit den für Anwendungen in Prozesskammern der Waferprozessierung bewährten Eigenschaften von hochreinem Quarzglas möglichst kombiniert werden.

Daneben kommen auch Komponenten aus anderen Materialien aus hochreinem Siliziumcarbid (z.B. CVD-SiC) und hochreinem Si zum Einsatz. Die Herstellung und Verarbeitung dieser Materialien sind allerdings im Vergleich zu Quarzglas deutlich aufwändiger und teurer.

Entsprechende Quarzglasmaterialien werden beispielsweise in der EP 3 068 739 A beschrieben. Das beschriebene Material ist ein Kompositwerkstoff mit einer Matrix aus Quarzglas, in die Bereiche aus Silizium-enthaltender Phase eingebettet sind. Der Kompositwerkstoff weist zwar eine hohe Absorption bei sichtbaren Wellenlängen und im nahen Infrarot bis 1 $\mu$m auf, darüber hinaus bricht bei Raumtemperatur die Absorption jedoch stark ein. Erst bei höheren Temperaturen steigt die Absorption für einen Wellenlängenbereich größer 1 $\mu$m an und erreicht ab etwa 1000 °C einen konstanten Wert. Bei geringeren Temperaturen ist die Infrarotabsorption jedoch stark temperaturabhängig, was die Prozesssteuerung schwer und damit nachteilig macht.

Ein weiterer Kompositwerkstoff, welcher für Anwendungen in Prozesskammern der Waferprozessierung vorgeschlagen wird, ist aus der US 2001/025001 A bekannt. Der Kompositwerkstoff besteht aus Quarzglas und einer zweiten Phase aus Silicium, Siliciumcarbid, Siliciumnitrid, Titannitrid oder Titancarbid. Dabei wird sich die Aufgabe gesetzt, ein Material bereitzustellen, dass bei der mechanischen Bearbeitung weniger empfindlich gegen Sprünge ist als Quarzglas und das weniger Partikel abgibt. Der Kompositwerkstoff weist bedingt durch die Herstellmethode eine offene Porosität kleiner als 15 % bzw. kleiner 5% auf. Offenporige Materialien lassen sich sehr schwer reinigen, insbesondere mit Flüssigkeiten bzw. Säuren. Bei der mechanischen Bearbeitung können Verunreinigungen in offene Porenkanäle eindringen. Es ist praktisch unmöglich diese Verunreinigungen anschließend rückstandsfrei zu entfernen. Darüber hinaus werden optische Eigenschaften des resultierenden Werkstoffs nicht beschrieben und - insofern Siliziumcarbid als zweite Phase in dem Komposit betroffen ist - enthält der resultierende Werkstoff aus der US 2001/025001 A Kohlenstoff. Dieses ergibt sich aus dem angewendeten Herstellverfahren: Siliziumcarbid enthält als Ausgangsmaterial immer Kohlenstoff als Verunreinigung, welches in dem beschriebenen Herstellverfahren der Vakuumsinterns unter Druck nicht entfernt wird.

JP 2006/027930 A betrifft ein schwarzes Quarzglas, wobei die Schwarzfärbung durch den Einbau von Grafitpartikeln zustande kommt. Das Quarzglas wird aus einer Mischung von amorphem Quarzglaspulver (Soot) und Grafitpulver mit definierten Korngrößenverteilungen durch Sinterung hergestellt. Die verwendeten Kohlenstoffpartikel machen 0,05 bis 2 Gew.-% des $SiO_2$-Gewichts aus, die Durchmesserangaben liegen bei 0,07 bis 0,5 $\mu$m oder 0,05 bis 1 $\mu$m. Als $SiO_2$-Einsatzpulver wird unter anderem gemahlenes Quarzglas eingesetzt, dass durch Flammhydrolyse in einer Wasserstoff-/Sauerstoffflamme erzeugt wird. Das erhaltene Material wird bei 1100 bis 1500 °C gesintert. Bei zu hohen Temperaturen wird dabei ein Dichteabfall beim Quarzglas beobachtet, was auf eine Blasenbildung zurückzuführen ist. Das resultierende Quarzglas enthält elementaren Kohlenstoff, was nachteilig für bestimmte Anwendungen ist.

JPH05170477 A betrifft ein schwarzes Quarzglas und eine Zelle für optische Analysen unter Verwendung dieses Glases. Das Quarzglas ist mit 0,05 bis 0,3 Gew.-% SiC (bezogen auf die C-Konzentration) dotiert. Dabei wird die Entglasungsstabilität durch das Zudotieren von Stickstoff (10 - 5000 ppm), Fluor (10 - 5000 ppm) und Chlor (10 - 1000 ppm) erhöht. Die Transmission bei 1 mm Schichtdicke liegt bei max. 1 % im Wellenlängenbereich zwischen 200 bis 25000 nm. Das resultierende Quarzglas enthält elementaren Kohlenstoff, was nachteilig für bestimmte Anwendungen ist.

US 5,674,792 betrifft ein Verfahren zur Herstellung von opaken Quarzglasmaterial aus einem Schlicker (Schlickergussverfahren); das beschriebene Material enthält lediglich $SiO_2$-Partikel und Poren.

Nachteilig an diesen aus dem Stand der Technik bekannten Kompositwerkstoffen ist, dass die Absorption bei Wellenlängen im nahen Infrarot, d.h. von 1 bis 3 $\mu$m, bei Raumtemperatur gering ist und zudem stark von der Temperatur abhängt. Verunreinigungen insbesondere mit metallischen Verbindungen können die Absorption in diesem Bereich anheben, sind aber in Materialien für Halbleiteranwendungen unerwünscht. Auch ein Anteil an elementarem Kohlenstoff, wie er beispielsweise bei SiOz/SiC-Kompositwerkstoffen aus der US 2001/025001 A vorkommt, ist nachteilig.

Die vorliegende Erfindung stellt sich somit die Aufgabe, einen Kompositwerkstoff bereitzustellen, welcher eine möglichst hohe Absorption im nahen Infrarot, d.h. von 1 bis 3 $\mu$m, schon bei Raumtemperatur in Verbindung mit einer geringen Temperaturabhängigkeit der Absorption aufweist. Diese (infrarot-)optischen Eigenschaft sollen mit den für Anwendungen in Prozesskammern der Waferprozessierung bewährten Eigenschaften von hochreinem Quarzglas kombiniert werden. Diese erforderlichen Eigenschaften werden unter anderem ausgewählt aus der Gruppe, bestehend aus einer hohen Reinheit, einer hohen Temperaturbeständigkeit, einer hohen Temperaturwechselbeständigkeit, einer hohen chemischen Beständigkeit, einer guten elektrische Isolation, einer guten mechanischen Festigkeit, der Möglichkeit einer rückstandsfreien Reinigung, z.B. durch Ultraschall-Reinigung und Flusssäure (HF)-Reinigung, einer mechanischen Bearbeitbarkeit, einer geringen Partikelabgabe im Prozess und im Vergleich zu hochreinen Keramiken günstige Kosten der Herstellung.

Gelöst werden diese Aufgaben im Rahmen der vorliegenden Erfindung durch einen Kompositwerkstoff mit einer Matrix aus Quarzglas, in die Bereiche aus Siliziumcarbid-enthaltender Phase eingebettet sind.

Gegenstand der vorliegenden Erfindung ist damit ein Kompositwerkstoff mit einer Matrix aus Quarzglas, in die Bereiche aus Siliziumcarbid-enthaltender Phase eingebettet sind.

Erfindungsgemäß wurde herausgefunden, dass ein Kompositwerkstoff mit einer Matrix aus Quarzglas, in die Bereiche aus Siliziumcarbid-enthaltender Phase eingebettet sind, eine hohe Absorption im nahen Infrarot, d.h. von 1 bis 3 $\mu$m, schon bei Raumtemperatur in Verbindung mit einer geringen Temperaturabhängigkeit der Absorption aufweist und damit sich hervorragend für die Verwendung in Prozesskammern der Waferprozessierung eignet.

Der erfindungsgemäße Kompositwerkstoff weist gegenüber dem in EP 3 068 739 A beschriebenen Kompositwerkstoff aus SiOz und Silizium eine deutlich höhere Absorption im infraroten Bereich bei Wellenlängen größer gleich 1 $\mu$m bei Temperaturen unterhalb von 1000 °C auf. Zudem ist die Absorption des Materials in diesem Wellenlängenbereich weit weniger temperaturabhängig als der vergleichbare Kompositwerkstoff gemäß EP 3 068 739 A.

Der erfindungsgemäße Kompositwerkstoff weist gegenüber dem in US 2001/025001 A im Wesentlichen keinen Kohlenstoff auf, was für seine intendierte Verwendung bevorzugt ist.

Die Matrix des erfindungsgemäßen Kompositwerkstoff ist entweder opak, transluzent oder transparent. In der Matrix liegen in sehr feiner Verteilung Bereiche einer Phase vor, die Siliziumcarbid (SiC) enthalten und vorliegend als Siliziumcarbid-enthaltende Phase bezeichnet werden.

Diese Bereiche haben Auswirkungen auf die Wärmeabsorption des erfindungsgemäßen Kompositwerkstoffs insgesamt. Dies ist im Wesentlichen auf die Eigenschaften des Siliciumcarbids zurückzuführen.

Der erfindungsgemäße Kompositwerkstoff weist eine hohe Absorption im nahen Infrarot, d.h. von 1 - 3 $\mu$m auf, so dass sich das Material auch bei geringen Wandstärken effizient und schnell aufheizen lässt.

Der erfindungsgemäße Kompositwerkstoff weist eine Absorption einer 3 mm dicken Scheibe bei 1500 nm von vorzugsweise größer 40%, weiter bevorzugt größer 50 %, auf.

Darüber hinaus weist der erfindungsgemäße Kompositwerkstoff eine geringe Änderung des Absorptionsvermögens (bzw. der Emissiviät) einer 3 mm Scheibe im NIR bei 1,5 $\mu$m Wellenlänge zwischen Raumtemperatur (20 °C) und 1000 °C auf. Die Änderung des Absorptionsvermögens (bzw. der Emissiviät) liegt vorzugsweise bei kleiner 0,3, weiter bevorzugt bei kleiner 0,2, besonders bevorzugt bei kleiner 0,1.

Die Siliziumcarbid-enthaltenden Phasen sind sehr fein und homogen in der Quarzglasmatrix verteilt. Obwohl sie direkt auf der Oberfläche des Kompositwerkstoffs liegen können, ist eine Beschichtung zum Schutz vor Oxidation nicht erforderlich. Eine Beschichtung würde ansonsten zu zusätzlichen unerwünschten Reflexionen an der Schnittstelle zum Kompositwerkstoff führen.

Der Gewichtsanteil an Siliziumcarbid-enthaltender Phase, jeweils bezogen auf die Matrix aus Quarzglas, in dem erfindungsgemäßen Kompositwerkstoff ist vorzugsweise kleiner gleich 10 Gew.-%, weiter bevorzugt kleiner gleich 9 Gew.-%, noch weiter bevorzugt kleiner gleich 8 Gew.-%, noch weiter bevorzugt kleiner gleich 7 Gew.-%, noch weiter bevorzugt kleiner gleich 6 Gew.-%, noch weiter bevorzugt kleiner gleich 5 Gew.-%.

Ein Gewichtsanteil an Siliziumcarbid-enthaltender Phase, bezogen auf die Matrix aus Quarzglas, in dem erfindungsgemäßen Kompositwerkstoff von kleiner 5 Gew.-% ist aufgrund der erfindungsgemäß erwünschten geringen Porosität, die weiter unten beschrieben wird, erwünscht.

Der Gewichtsanteil an Siliziumcarbid-enthaltender Phase, jeweils bezogen auf die Matrix aus Quarzglas, in dem erfindungsgemäßen Kompositwerkstoff ist vorzugsweise größer gleich 0,25 Gew.-%, weiter bevorzugt größer gleich 0,5 Gew.-%, noch weiter bevorzugt größer gleich 1 Gew.-%, noch weiter bevorzugt größer gleich 1,5 Gew.-%, noch weiter bevorzugt größer gleich 2 Gew.-%, noch weiter bevorzugt größer gleich 2,5 Gew.%.

Der Gewichtsanteil an Siliziumcarbid-enthaltender Phase, jeweils bezogen auf die Matrix aus Quarzglas, in dem erfindungsgemäßen Kompositwerkstoff ist vorzugsweise 0,25 bis 10 Gew.-%, weiter bevorzugt 0,5 bis 9 Gew.-%, noch weiter bevorzugt 1 bis 8 Gew.-%, noch weiter bevorzugt 1,5 bis 7 Gew.-%, noch weiter bevorzugt 2 bis 6 Gew.-%, noch weiter bevorzugt 2,5 bis 5 Gew.-%.

Die Wärmeabsorption des erfindungsgemäßen Kompositwerkstoffs ist abhängig vom Anteil der Siliziumcarbid-enthaltenden Phase. Je größer der Anteil dieser Phase ist, desto höher ist die Absorptionsvermögen und das Emissionsvermögen. Der Gewichtsanteil der Siliziumcarbid-enthaltenden Phase sollte daher vorzugsweise über den vorstehend definierten Minimalmengen liegen. Andererseits kann ein hoher Volumenanteil der Siliziumcarbid-enthaltenden Phase die Herstellung des Verbundwerkstoffs erschweren, so dass die vorstehend angegebenen Maximalmengen eine geeignete Obergrenze darstellen. Für die Absorption im infraroten Wellenlängenbereich größer 1 $\mu$m bis 5 $\mu$m ist hauptsächlich die Siliziumcarbid-enthaltenden Phase verantwortlich.

Die Matrix des erfindungsgemäßen Kompositwerkstoffs besteht vorzugsweise aus Quarzglas mit einem Hydroxylgruppengehalt von höchstens 30 Gew.-ppm. Hydroxylgruppen bewirken, dass die Viskosität von Quarzglas sinkt. Hydroxylgruppen sind daher ungünstig im Hinblick auf eine hohe Formbeständigkeit bei thermischer Belastung, so dass die vorgenannte Höchstmenge vorzugweise einzuhalten ist.

Der Hydroxylgruppengehalt von transparentem Quarzglas wird üblicherweise durch eine Infrarot-Transmissionsmessung bestimmt. Für den wärmeabsorbierenden Kompositwerkstoff ist diese Messmethode jedoch nicht ohne weiteres geeignet. Deshalb wird der Hydroxylgruppengehalt des Verbundmaterials anhand von Emissionsmessungen im Bereich der Absorptionswellenlänge der Hydroxylgruppen in Quarzglas (bei 2,72 $\mu$m), durch Vergleich mit einem Standard mit bekanntem Hydroxylgruppengehalt bestimmt.

Die Matrix des erfindungsgemäßen Kompositwerkstoffs kann aus undotiertem oder dotiertem Quarzglas bestehen. Dotiertes Quarzglas im Sinne der Erfindung kann neben SiOz weitere oxidische, nitridische oder carbidische Bestandteile in einer Menge von bis zu maximal 1000 PPM enthalten.

Die Bereiche aus Siliziumcarbid-enthaltender Phase werden vorzugsweise aus partikulärem Siliziumcarbid gebildet. In diesem Fall ist der d90-Wert der Partikelgrößenverteilung der Siliziumcarbid-Partikel vorzugsweise kleiner 100 $\mu$m, weiter bevorzugt kleiner 75 $\mu$m, noch weiter bevorzugt kleiner 50 $\mu$m.

Die mittlere Größe der Siliziumcarbid-Partikel wird im Rahmen der vorliegenden Erfindung besonders bevorzugt an die mittlere Teilchengröße der $SiO_2$-Matrixparikel angepasst, so dass es bei der Herstellung der erfindungsgemäßen Kompositwerkstoffe nicht zu unerwünschten Trennungseffekte durch Sedimentation kommt.

Die Partikelgrößenverteilung wurden per Laserbeugung mit dem Mastersizer 3000 der Fa. Malvern gemessen.

Das Siliziumcarbid in der Siliziumcarbid-enthaltenden Phase kann in dem erfindungsgemä-βen Kompositwerkstoff als beliebige Modifikation vorliegen. Bevorzugt im Rahmen der vorliegenden Erfindung ist es, wenn das Siliziumcarbid in dem erfindungsgemäßen Kompositwerkstoff als $\alpha$-SiC- und/oder als $\beta$-SiC-Modifikation vorliegt. Besonders bevorzugt ist es, wenn das Siliziumcarbid in dem erfindungsgemäßen Kompositwerkstoff als $\alpha$-SiC-Modifikation vorliegt.

Aufgrund der angedachten Verwendung des erfindungsgemäßen Kompositwerkstoffs ist es bevorzugt, wenn der Kompositwerkstoff eine hohe Reinheit aufweist. Daher unterliegen die Maximalwerte an zulässigen Verunreinigungen in den jeweiligen Bestandteilen des erfindungsgemäßen Kompositwerkstoffs vorzugsweise bestimmten Beschränkungen, die im Nachfolgenden näher beschrieben werden.

Entsprechend ist es bevorzugt, wenn die Siliziumcarbid-enthaltende Phase metallische Verunreinigungen von vorzugsweise weniger als 50 ppm, weiter bevorzugt weniger als 25 ppm, noch weiter bevorzugt weniger als 10 ppm, aufweist, wobei die metallischen Verunreinigungen durch Glimmentladungsspektroskopie bestimmt werden.

Es ist ferner bevorzugt, wenn die Matrix aus Quarzglas metallische Verunreinigungen von vorzugsweise weniger als 100 ppm, weiter bevorzugt weniger als 50 ppm, noch weiter bevorzugt weniger als 25 ppm, aufweist, wobei die metallischen Verunreinigungen durch optische Emissionsspektroskopie mit induktiv gekoppeltem Plasma bestimmt werden.

Es ist ferner bevorzugt, wenn der erfindungsgemäße Kompositwerkstoff metallische Verunreinigungen von vorzugsweise weniger als 100 ppm, weiter bevorzugt weniger als 50 ppm, noch weiter bevorzugt weniger als 25 ppm, aufweist, wobei die metallischen Verunreinigungen durch optische Emissionsspektroskopie mit induktiv gekoppeltem Plasma bestimmt werden.

Unter metallischen Verunreinigungen werden Alkalimetalle, Erdalkalimetalle, Übergangsmetalle, und anderen Metallen gemäß Klassifizierung im Periodensystem der Elemente verstanden.

Ein geringer Cristobalit-Gehalt in der Matrix von 1 % oder weniger sorgt für eine geringe Entglasungsneigung und damit für ein geringes Risiko der Rissbildung im Betrieb.

Im Rahmen der vorliegenden Erfindung sollten insbesondere Eisen und Kupfer als metallische Verunreinigungen vermieden werden.

Darüber hinaus ist es insbesondere bevorzugt, wenn der erfindungsgemäße Kompositwerkstoff einen Kohlenstoffgehalt von weniger als 0,1 Gew.-%, weiter bevorzugt weniger als 0,075 Gew.-%, noch weiter bevorzugt weniger als 0,05 Gew.-%, jeweils bezogen auf das Gesamtgewicht des Kompositwerkstoffs, aufweist. Insbesondere ist der erfindungsgemäße Kompositwerkstoff frei von Kohlenstoff.

Der Kohlenstoffgehalt bezieht sich hier bei auf den Gehalt an elementarem Kohlenstoff und umfasst nicht die Menge an Kohlenstoff in der Siliziumcarbid-enthaltenden Phase.

Der geringe Anteil an Kohlenstoff in dem erfindungsgemäßen Kompositwerkstoff wird durch seine weiter unten beschriebenen Herstellungsmethode realisiert. Der erfindungsgemäße Kompositwerkstoff wird während seiner Herstellung bei hohen Temperaturen unter Luftatmosphäre, also in Anwesenheit von Sauerstoff, gesintert, wodurch sich der geringe Kohlenstoffanteil ergibt.

Aufgrund der angedachten Verwendung des erfindungsgemäßen Kompositwerkstoffs ist es bevorzugt, wenn der Kompositwerkstoff eine geringe Porosität aufweisen.

Daher ist es bevorzugt, wenn der erfindungsgemäße Kompositwerkstoff eine Porosität von weniger als 8 %, weiter bevorzugt weniger als 6 %, noch weiter bevorzugt weniger als 5 %, aufweist, wobei die Porosität als das Porenvolumen bezogen auf das Gesamtvolumen des Kompositwerkstoffs definiert ist.

Insbesondere ist es bevorzugt, wenn der erfindungsgemäßen Kompositwerkstoff keine offene Porosität aufweist.

Große Poren im erfindungsgemäßen Kompositwerkstoff können zu unerwünschten diffusen Reflexionen beitragen. Die geringe Porosität des erfindungsgemäßen Kompositwerkstoffs begrenzt diesen Effekt. Außerdem enthält die Matrix vorzugsweise kleine Poren mit einer maximalen Porengröße von weniger als 50 $\mu$m. Die Poren bilden sich vorwiegend zwischen gesinterte $SiO_2$-Partikel und haben im Allgemeinen eine nicht kreisförmige Form.

Die erfindungsgemäß erreichte niedrige Porosität und geringe Porengröße des erfindungsgemäßen Kompositwerkstoff führt darüber hinaus zu weiteren technischen Vorteilen, wie eine hohe Festigkeit, eine hohe Ätzbeständigkeit (z.B. beim Naßätzen mit HF (einer Säure, die oft zum Reinigen von Quarzglasbauteilen verwendet wird)) und eine geringe Rauigkeit von mechanisch polierten Oberflächen.

Aufgrund der geringen Porosität der Quarzglasmatrix und der damit einhergehenden niedrigen diffusen Reflexion, kann sichtbares Licht und Infrarotstrahlung tief in die Matrix eindringen und erreicht auf diese Weise tiefer liegende Absorptionszentren, die aus der Silizumcarbid-enthaltenden Phase bestehen. Dies trägt somit zu einer größeren Absorption bei.

Mikroskopaufnahmen und Farbeindringtest zeigen, dass der erfindungsgemäße Kompositwerkstoff keine offene Porosität aufweist. Bei der nach dem Sintern verbleibende Restporosität handelt es sich um geschlossene Poren.

Aufgrund dieser erfindungsgemäß bevorzugten Porosität ergibt sich die Möglichkeit, die resultierenden erfindungsgemäßen Kompositwerkstoffe rückstandsfrei zu reinigen. Hierzu eignet sich beispielsweise eine Ultraschall-Reinigung oder eine Reinigung durch Flusssäure (HF).

Der erfindungsgemäße Kompositwerkstoff weist einen Reflactance-Wert von vorzugsweise 10 bis 150, weiter bevorzugt von 20 bis 100, noch weiter bevorzugt von 25 bis 90, auf. Der Reflactance-Wert wird im Rahmen der vorliegenden Erfindung mit dem Farbmessgerät Chroma Meter CR-410 der Fa. Konica Minolta (Y-Wert im Farbraum Yxy) gemessen.

Der erfindungsgemäße Kompositwerkstoff weist einen L*-Wert im Farbraum L*a*b* (perceptual lightness) von vorzugsweise 20 bis 200, weiter bevorzugt 30 bis 150, noch weiter bevorzugt 40 bis 100, auf.

Der erfindungsgemäße Kompositwerkstoff weist eine hemisphärische Transmission einer 3 mm dicken Scheibe aus dem Kompositwerkstoff von kleiner 10 %, weiter bevorzugt kleiner als 1 %, noch weiter bevorzugt kleiner als 0,6 %, im Wellenlängenbereich von 400 bis 2500 nm auf, was den erfindungsgemäßen Kompositwerkstoff insbesondere für die intendierte, weiter unten beschriebene Verwendung interessant macht. Die Transmission wird mittels eines Spektrometers (Gitterspektrometer) bestimmt, wobei zur Integration der Reflektierten und transmittierten Strahlung eine Ulbrichtkugel verwendet wird, welche die Messung der hemisphärischen Reflexion und Transmission erlaubt.

Der erfindungsgemäße Kompositwerkstoff weist eine hemisphärische Reflexion einer 3 mm dicken Scheibe aus dem Kompositwerkstoff von vorzugsweise weniger als 60 %, weiter bevorzugt weniger als 50 %, jeweils bei einer Wellenlänge von 1500 nm, auf.

Der erfindungsgemäße Kompositwerkstoff weist eine Änderung des Absorptionsvermögens / Emissiviät einer 3 mm Scheibe bei 1,5 $\mu$m Wellenlänge zwischen Raumtemperatur (20 °C) und 1000 °C kleiner als 0,3, weiter bevorzugt kleiner 0,2, besonders bevorzugt kleiner 0,1, auf.

Die Emissivität, von der hier die Rede ist, ist der "normale spektrale Emissionsgrad". Diese Größe wird auf der Grundlage eines Messprinzips bestimmt, das unter der Bezeichnung "Black-Body Boundary Conditions" (BBC) bekannt ist und veröffentlicht ist in "DETERMINING THE TRANSMITTANCE AND EMITTANCE OF TRANSPARENT AND SEMITRANS-PARENT MATERIALS AT ELEVATED TEMPERATURES"; J. Manara, M. Keller, D. Kraus, M. Arduini-Schuster; 5th European Thermal-Sciences Conference, Niederlande (2008). Nach dem kirchhoffschen Strahlungsgesetz ist für jeden Körper der normale spektrale Emissionsgrad gleich dem normalen spektralen Absorptionsgrad, hier kurz als Absorption bezeichnet.

Für Raumtemperatur wird die Absorption A aus der gemessenen hemisphärischen Reflexion R und der gemessenen hemisphärischen Transmission T über folgende Gleichung berechnet:

$$A = 1 - R - T$$

Der erfindungsgemäße Kompositwerkstoff weist eine spezifische Dichte von vorzugsweise mindestens 2,13 g/cm$^3$, weiter bevorzugt von mindestens 2,14 g/cm$^3$, noch weiter bevorzugt mindestens 2,15 g/cm$^3$, auf, wobei die spezifische Dichte nach Archimedes bestimmt wird.

Da der erfindungsgemäße Kompositwerkstoff keine offene Porosität aufweist, ist eine einfache Dichtemessung nach dem Prinzip von Archimedes möglich. Die Porosität wird anhand der Dichtemessung bestimmt, wobei die spezifische Zusammensetzung des erfindungsgemäßen Kompositwerkstoffs und die spezifischen Dichten der Quarzglasmatrix und der Siliziumcarbid-enthaltenden Phase berücksichtigt werden, so dass aus der spezifischen Dichte und den Mengenanteile der verwendeten Bestandteile des erfindungsgemäßen Kompositwerkstoffs die vorstehend definierte Porosität (Anteil des Porenvolumens am Gesamtvolumen) berechnet wird.

Der erfindungsgemäße Kompositwerkstoff unterscheidet sich gegenüber dem in EP 3 068 739 A beschriebenen Kompositwerkstoff durch den zusätzlichen Zusatz von Siliziumcarbid-Partikeln. Der erfindungsgemäße Kompositwerkstoff weist keine offene Porosität auf und unterscheidet sich dadurch von den in US 2001/025001 A beschriebenen Silizium-Kompositen, die noch offenporig sind. Um die gewünschte Absorption zu erreichen sind zudem keine so hohen Siliziumcarbid-Anteile nötig, wie sie die in der US 2001/025001 A beschriebenen Werkstoffe aufweisen.

Die Unterschiede in den Materialeigenschaften zwischen den in US 2001/025001 A beschriebenen Werkstoffen und dem erfindungsgemäßen Kompositwerkstoff liegen in den unterschiedlichen Herstellverfahren begründet. Der erfindungsgemäße Kompositwerkstoff wird, wie weiter unten noch beschrieben, mittels Schlickerguss hergestellt, wodurch Grünkörper mit höherer Dichte als beim in US 2001/025001 A beschrieben Trockenpressen erreicht werden. Dadurch werden durch atmosphärisches Sintern schon bei Temperaturen kleiner als 1400 °C Komposite hoher Dichte ohne offene Porosität erreicht, wohingegen die trockengepressten Si-Kompositwerkstoffe aus US 2001/025001 A trotz Heißpressen bei 1400 °C unter hohem Pressdruck (20 bis 40MPa) immer noch offenporig sind. Unter Atmosphäre gelingt es gar nicht, die trocken gepressten Grünkörper ausreichend zu sintern.

Der erfindungsgemäße Kompositwerkstoff weist gegenüber dem in EP 3 068 739 A beschriebenen SiO$_2$/Si-Komposit eine deutlich höhere Absorption im Infraroten bei Wellenlängen größer 1 μm bei Temperaturen kleiner 1000 °C auf. Zudem ist die Absorption des Materials in diesem Wellenlängenbereich weit weniger temperaturabhängig.

Der erfindungsgemäße Kompositwerkstoff wird, wie weiter unten noch beschrieben, unter normaler Atmosphäre unter Luft gesintert. Unter diesen Sinterbedingungen werden etwaige im Pulver und dem daraus hergestellten Grünkörper noch enthaltene Kunststoffpartikel und organische Verbindungen (z.B. Abrieb von Behältern und Werkzeugen, Additive wie Binder oder Filtrationshilfsmittel) und Rückstände elementaren Kohlenstoffs durch übliche Verunreinigungen im Siliziumcarbid durch Reaktion mit dem in der Luft enthaltenen Sauerstoff verbrannt und damit entfernt. Diese Reaktionen finden während des Aufheizens des Grünkörpers in einem Temperaturbereich unter 1000 °C statt, in dem der Formkörper noch offenporig ist und entstehende gasförmige Verbindungen leicht entweichen können.

Die in US 2001/025001 A beschriebene Siliziumcarbid-enthaltenden Kompositwerkstoffe mussten unter Vakuum und Druck gesintert werden, um geschlossene Porosität zu erreichen. Daher enthalten diese Komposite noch elementaren Restkohlenstoff.

Um die gewünschte Absorption in dem erfindungsgemäßen Kompositwerkstoffen zu erreichen sind keine so hohen Siliziumcarbid-Anteile (größer 5 Gew.-%) nötig, wie sie die Materialien der US 2001/025001 A aufweisen.

Die vorliegende Erfindung betrifft darüber hinaus ein Verfahren zur Herstellung eines Kompositwerkstoffs, insbesondere zur Herstellung eines wie vorstehend beschriebenen Kompositwerkstoffs.

Das erfindungsgemäße Verfahren ist durch die nachfolgenden Verfahrensschritte gekennzeichnet:

a. Bereitstellen einer Mischung, umfassend amorphe Quarzglaspartikel und ein siliziumcarbidhaltiges Pulver, als Suspension;

b. Ausbilden eines Formkörpers mittels eines Schlickergussverfahrens ausgehend von der in Verfahrensschritt a. hergestellten Suspension unter Erhalt eines Grünkörpers;

c. Trocknung des Grünkörpers; und

d. Sintern des aus Verfahrensschritt c. resultierenden getrockneten Grünkörpers.

Die vorstehend beschriebenen Spezifika der einzelnen Bestandteile, wie Partikelgröße, Partikelgrößenverteilung, Reinheit usw. gelten sinngemäß auch für das erfindungsgemäße Verfahren.

Der Verfahrensschritt a. wird vorzugsweise so durchgeführt, dass das siliziumcarbidhaltige Pulver in eine wässrige Suspension aus Quarzglaspartikeln eingemischt wird. Zusätzlich können in dem Verfahrensschritt a. noch aus der keramischen Verfahrenstechnik bekannte Additive wie Dispergierhilfsmittel, Filtrationshilfsmittel, Bindemittel usw.

zugesetzt werden.

Die Korngrößenverteilung der Quarzglaspartikel in der Suspension, die im Verfahrensschritt a. bereitgestellt wird, weist einen d90-Wert von vorzugsweise kleiner als 100 $\mu$m, weiter bevorzugt kleiner als 75 $\mu$m, noch weiter bevorzugt kleiner als 50 $\mu$m, auf, jeweils bestimmt durch Laserbeugung gemäß ISO 2019:13320.

Der Feststoffgehalt in der wässrigen Suspension aus Quarzglaspartikeln, die im Verfahrensschritt a. bereitgestellt wird, beträgt vorzugsweise mehr als 50 Gew.-%, weiter bevorzugt mehr als 65 Gew.-%, noch weiter bevorzugt mehr als 75 Gew.-%. Identische Feststoffgehalte werden auch für die resultierende Mischung aus Quarzglaspartikeln und siliziumcarbidhaltigen Pulver erreicht.

Das Siliziumcarbid-enthaltende Pulver können mit dem Quarzglaspulver vor Herstellung der Suspension gemischt werden. Hierzu eignet sich beispielsweise ein Trockenmischen.

Es hat sich jedoch als besonders vorteilhaft erwiesen, wenn das Siliziumcarbid-enthaltende Pulver in die Flüssigkeit, die das amorphe Quarzglaspulver enthält, wie bereits erwähnt, eingemischt werden.

Im Verfahrensschritt a. des erfindungsgemäßen Herstellverfahrens kann das Einmischen des Siliziumcarbid-enthaltenden Pulvers in die Flüssigkeit, enthaltend Quarzglaspartikel, vorzugsweise in einer Mischanlage mit Rührwerk oder Dissolver durchgeführt werden.

Das Siliziumcarbid-enthaltende Pulver werden eingemischt, bevor die Flüssigkeit entfernt wird. In der Suspension ist das homogene Mischen besonders einfach zu bewerkstelligen.

Der Feststoffgehalt, die Partikelgröße und die Partikelgrößenverteilung der Quarzglaspartikeln haben Auswirkungen auf die Kontraktion des Grünlings während der anschließenden Trocknung. So kann die Kontraktion beim Trocknen durch die Verwendung relativ grober $SiO_2$-Teilchen verringert werden. In diesem Zusammenhang sind etablierte Quarzglaspulver solche, bei denen die amorphen Quarzglas-Partikel Teilchengrößen im Bereich bis maximal 200 $\mu$m, bevorzugter maximal 100 $\mu$m, aufweisen, wobei Quarzglas Teilchen mit Partikelgrö-ßen zwischen 1 $\mu$m und 60 $\mu$m den größten Volumenanteil des Quarzglaspulvers ausmachen.

Im Verfahrensschritt b. des erfindungsgemäßen Herstellverfahrens wird das Schlickergussverfahren dergestalt durchgeführt, dass die angemischte Suspension aus den Quarzglaspartikel und dem Siliziumcarbid-enthaltende Pulver in Formen gefüllt werden, wobei die Formen poröse Komponenten enthalten, über die der Suspension ein Teil des Wassers entzogen wird, so dass sich ein formstabiler Körper ausbildet.

Im Verfahrensschritt c. wird der Grünkörper vorzugsweise aus der Form genommen und getrocknet, wobei noch im Grünkörper verbliebenes Restwasser verdunstet.

Der aus Verfahrensschritt c. resultierende getrocknete Grünkörper weist eine Dichte vorzugsweise größer gleich 1,60 g/cm$^3$, weiter bevorzugt größer gleich 1,65 g/cm$^3$, noch weiter bevorzugt größer gleich 1,70 g/cm$^3$, auf.

Das erfindungsgemäße Schlickergussverfahren führt zu einem Zwischenzustand in Form eines Grünlings. Sowohl das Schlickergussverfahren als auch das Zwischenprodukt des Grünkörpers ermöglichen Maßnahmen zur Einstellung und Veränderung von Eigenschaften, die Auswirkungen auf den endgültigen Verbundwerkstoff haben.

So erleichtert die Verarbeitung der Ausgangspulver in der Suspension die innige Vermischung untereinander und die Herstellung einer homogenen Verteilung im Grünling. Die Flüssigkeit hat auch die Funktion eines Bindemittels oder Aktivierungsmittels zwischen den festen Bestandteilen. die Flüssigkeit kann die Oberflächen der Pulverteilchen verändern und insbesondere zu Wechselwirkungen zwischen ihnen führen, was bei der anschließenden Sinterung zu einer undurchlässigeren und stabileren Verbindung beitragen kann.

Die Suspension kann auf der Grundlage eines organischen Lösungsmittels, vorzugsweise auf alkoholischer Basis oder noch bevorzugter auf wässriger Basis erfolgen. Die polare Natur der wässrigen Phase kann für die oben erwähnten Wechselwirkungen des Quarzglases von Vorteil sein.

Im Zustand des Grünkörpers ist der Verbund aus Quarzglasphase und der Siliziumcarbid-enthaltenden Phase porös und kann über die Gasphase verändert werden, wobei insbesondere die Dotierung und die reaktive Trocknung zu nennen sind.

Zu berücksichtigen ist, dass der Formkörper beim abschließenden Sintern im Verfahrensschritt d. deutlich schrumpft. Typischerweise beträgt die lineare Schwindung ca. 10%. Deswegen muss der Grünkörper größer sein als der gesinterte Formkörper. Der gesinterte Formkörper wird dann noch mechanisch bearbeitet, um das finale Bauteil zu erhalten. Der gesinterte Formkörper hat eine endkonturnahe Form.

Dabei handelt es sich zum Beispiel um einen Vollkörper, einen Hohlkörper oder eine Schicht auf einem Grundkörper. Der Grünkörper kann durch Gießen der Suspension in eine Form hergestellt werden. Es eignen sich aber auch andere Verarbeitungsmethoden für die Suspension, wie zum Beispiel das schichtweise Auftragen durch Eintauchen, Aufsprühen, Aufpinseln, Aufspachteln, Übertragen, Ablegen, Aufrakeln und dergleichen.

Der Grünling wird getrocknet und daraus ein weitgehend wasserfreier Formkörper gewonnen. Als unvermeidliche Folge seiner Herstellung enthält der Grünling jedoch eine große Menge an Hydroxylgruppen. Er wird im Nachgang im Allgemeinen zu einem gasundurchlässigen, mechanisch belastbaren Formkörper gesintert.

Das erfindungsgemäße Verfahren kann vorzugsweise einen Verfahrensschritt umfassen, in welchem der aus Verfahrensschritt c. resultierende getrocknete Grünkörper vor dem Sintern im Verfahrensschritt d. mechanisch bearbeitet wird.

Die Sintertemperatur im Verfahrensschritt d. ist dabei so zu wählen, dass eine möglichst hohe Dichte des gesinterten Verbundwerkstoffs erreicht wird. Die für die Sinterung geeigneten Parameter (Sintertemperatur, Sinterzeit und Atmosphäre) kann durch einfache Versuche bestimmt werden. Beispiele geeigneter Verfahrensbedingungen sind nachfolgend beschrieben.

Der Verfahrensschritt d. des Sinterns wird bei einer Temperatur vorzugsweise größer gleich 1300 °C, weiter bevorzugt größer gleich 1325 °C, noch weiter bevorzugt größer gleich 1350 °C, durchgeführt. Dabei verdichtet sich das Material und der Formkörper schrumpft, wobei die lineare Schwindung bei ca. 10% liegen kann.

Der Verfahrensschritt c. wird insbesondere bei einer Temperatur kleiner als 1600 °C, weiter bevorzugt kleiner als 1500 °C, noch weiter bevorzugt kleiner als 1400 °C, durchgeführt.

Die Dauer des Verfahrensschritts d. hängt von der Temperatur und der Ausgangsdichte des Grünkörpers ab. Bei 1390 °C sind für schlickergegossenen Grünkörper in der Regel 4 Stunden nötig, um vollständig geschlossene Porosität zu erreichen. Bei geringerer Temperatur kann der Verfahrensschritt e. länger dauern.

Der Verfahrensschritt d. des Sinterns wird vorzugsweise unter atmosphärischen Bedingungen, d.h. an Luft und unter Normaldruck, durchgeführt.

Der Grünkörper aus Quarzglas- und Siliziumcarbid-Partikeln ergib nach dem Sintern ein Material, das einen deutlich geringeren Hydroxidgruppengehalt aufweist, als Material, welches durch Sintern eines Grünkörpers entsteht, welcher ausschließlich aus $SiO_2$-Partikeln besteht.

Beim Sintern werden vorhandenes Wasser und Hydroxylgruppen verbraucht und in SiOz umgewandelt. Aufgrund der Herstellungstechnik im Schlickergussverfahren ist der Gehalt an Hydroxylgruppen in der gesinterten Komponente erstaunlich gering und liegt vorzugsweise unter 30 Gew.-ppm. Daraus resultiert eine relativ hohe Viskosität des Kompositwerkstoffs.

Weiterer Gegenstand der vorliegenden Erfindung ist die Verwendung des erfindungsgemäßen Kompositwerkstoffs zur Herstellung von Bauteilen von Prozesskammern zur Waferherstellung und -bearbeitung. Die erfindungsgemäßen Bauteile bestehen ganz oder teilweise aus dem erfindungsgemäßen Kompositwerkstoff. Besteht das Bauteil nur teilweise aus dem erfindungsgemäßen Kompositwerkstoff, bildet dieser Werkstoff vorzugsweise zumindest einen Teil der Oberfläche des Bauteils. Eine Beschichtung aus dem erfindungsgemäßen Kompositwerkstoff eignet sich aufgrund ihrer chemischen Zusammensetzung besonders gut zum Aufbringen auf Quarzglas, d.h. zur Herstellung von Quarzglas/Verbundwerkstoff-Verbundteilen. Das Bauteil, oder zumindest die Oberfläche des Bauteils, weist die erläuterten optischen und strukturellen Eigenschaften auf.

Zumindest bereichsweise besitzt das erfindungsgemäße Bauteil somit eine Quarzglasmatrix mit einem geringen Porengehalt und mit einer darin fein verteilten, aber eingekapselten Siliziumcarbid-enthaltenden Phase. Selbst bei dünnen Schichten mit einer Ausdehnung von ungefähr 1 mm ist das erfindungsgemäße Bauteil im sichtbaren Wellenlängenbereich undurchsichtig, hat aber ansonsten weitgehend die für Quarzglas typischen chemischen und mechanischen Eigenschaften.

Neben dem Einsatz für Anwendungen, die eine hohe Wärmeaufnahme und gleichmäßige Temperaturverteilung erfordern, ist das Bauteil auch für Anwendungen geeignet, bei denen eine hohe thermische und chemische Stabilität und eine hohe Beständigkeit gegenüber korrosiven Gasen und Flüssigkeiten wichtig sind. Solche Anforderungen bestehen häufig für Bauteile in der Halbleiterfertigung, in der Optik und in der Chemietechnik.

Der hohe Emissionsgrad des Kompositwerkstoffs prädestiniert das Bauteil insbesondere für den Einsatz im Rahmen von Wärmebehandlungen, bei denen eine reproduzierbare und homogene Temperaturverteilung wichtig ist.

Erfindungsgemäß ist daher die Verwendung des Bauteils für Komponenten von Prozesskammern, in denen Halbleiterwafer zu Chips verarbeitet werden, vorgesehen. Insbesondere finden die Bauteile Anwendung für Anlagen in denen Hochtemperaturprozesse (z.B. CVD, ALD, Epitaxie oder Tempern) durchgeführt werden.

Ein weiterer erfindungsgemäßer Verwendungszweck besteht für Komponenten, die mittels Strahlung (Lampe) beheizt werden sowie für Komponenten, die Wärmestrahlung abblocken sollen.

Das erfindungsgemäße Bauteil ist als Komponente einer Prozesskammer zur Verwendung in einem Oxidations- oder Wärmebehandlungsverfahren, in der Epitaxie oder in der chemischen Gasphasenabscheidung vorgesehen.

Das Bauteil kann beispielsweise die Form eines Gefäßes, einer Schale, eines Gehäuses, als Vollkörper, Hohlkörper in erweiterter oder gebogener Form annehmen. In einfachen Fällen ist das Bauteil als Platte, Ring, Flansch, Kuppel, Tiegel, Voll- oder Hohlzylinder ausgebildet. Der Kompositwerkstoff kann in Form eines Vollkörpers oder einer Schicht vorliegen.

Ausführungsbeispiel:

Es wurden die Proben 1 (L12), 2 (L13), 3 (L14), 4 (L15), 5 (L16), 6 (L20), 7 (L21), 8 (L22), 9 (L6), 10 (Referenz A), 11 (Referenz B) und 12 (Referenz C) wie folgt hergestellt:

Als Ausgangsmaterial für die Herstellung der Labormuster wurde eine wässrige Suspension aus gemahlenen Quarzglaspartikeln verwendet. Der Feststoffgehalt der Suspension betrug 78 Gew%, der D90 Wert der Partikelgrößenverteilung lag bei 45 $\mu$m.

Der Suspension wurde mit einem Laborrührer SiC- Pulver gemäß den in der Tabelle 1 angegebenen Anteilen (Werte beziehen sich auf die vorgelegte SiO$_2$-Menge) beigemischt.

Die D10, D50 und D90 Werte der Partikelgrößenverteilungen der SiC-Pulver waren wie folgt:

SiC-Pulver 1:  D10 = 2,9 $\mu$m , D50 = 5,4 $\mu$m , D90 = 9,6 $\mu$m

SiC-Pulver 2:  D10 = 1,7 $\mu$m , D50 = 8,2 $\mu$m, D90 = 16,8 $\mu$m

Die Partikelgrößen wurden per Laserbeugung mit dem Mastersizer 3000 der Fa. Malvern gemessen.

Pulver 1 besteht hauptsächlich aus $\alpha$-SiC (Polytype 6H), wohingegen es ich bei Pulver 2 und $\beta$-SiC (Polytype 3C) handelt. Die Kristallstruktur wurde mittels Röntgenbeugung bestimmt.

Zur Herstellung der Probekörper wurde die gemischte Suspension in eine zylindrische Form gegossen, deren Boden aus porösem Material bestand, über den der Suspension ein Teil des Wassers entzogen wurden, bis ein formstabiler Grünkörper entstand.

Nach abgeschlossener Formgebung wurde der Grünkörper in einem Trockenschrank bei 60 °C bis auf eine Restfeuchte < 1 % getrocknet.

Der getrocknete Grünkörper wurde anschließend mit den in der Tabelle angegebenen Sinterparametern in einem elektrisch beheizten Ofen gesintert.

Die optischen Messungen und die Dichtemessung wurden an einer aus dem Zentrum des gesinterten zylindrischen Formkörpers geschnittenen Probe durchgeführt.

Die Farbmessungen wurden an einer Querschnittsfläche des entlang seiner Achse halbierten gesinterten Formkörpers durchgeführt.

Tabelle 1

| Probe | Anteil Si | Anteil SiC Pulver 1 α-type | Anteil SiC Pulver 2 β-type | Sinterparameter (Temperatur, Haltezeit) | Dichte (g/cm$^3$), gemessen | Porosität, berechnet | Reflectance Y im Yxy Farbraum | Perceptual Lightness L* im L*a*b* Farbraum | a* im L*a*b* Farbraum | b* im L*a*b* Farbraum |
|---|---|---|---|---|---|---|---|---|---|---|
| L12 | 0% | 0,5% | 0% | 1390°C, 5h | 2,147 | 2,61% | 53,9 | 78,4 | -6,90 | 4,51 |
| L13 | 0% | 1,0% | 0% | | 2,142 | 2,98% | 49,3 | 75,6 | -7,31 | 4,62 |
| L14 | 0% | 2,5% | 0% | | 2,154 | 2,91% | 42,1 | 70,9 | -8,02 | 5,36 |
| L15 | 0% | 5,0% | 0% | | 2,156 | 3,52% | 38,9 | 68,7 | -7,89 | 5,43 |
| L16 | 0% | 10,0% | 0% | | 2,181 | 3,78% | 36,4 | 66,8 | -7,70 | 5,67 |
| L20 | 0% | 0% | 0,5% | | 2,159 | 2,06% | 57,1 | 80,3 | -5,97 | 17,73 |
| L21 | 0% | 0% | 2,5% | | 2,153 | 2,93% | 48,1 | 74,9 | -6,45 | 20,16 |
| L22 | 0% | 0% | 10,0% | | 2,178 | 3,89% | 41,8 | 70,7 | -5,49 | 19,59 |
| L6 | 0% | 2,5% | 0% | 1390°C, 10h | 2,105 | 5,08% | 38,6 | 68,5 | -8,40 | 5,76 |
| Referenz A | - | - | - | 1390°C, 5h | 2,184 | 0,77% | | | | |
| Referenz B | 2,5% | - | - | 1390°C, 5h | 2,193 | 0,50% | | | | |
| Referenz C | 2,5% | - | - | 1390°C, 8h | 2,198 | 0,28% | | | | |

EP 4 737 410 A1

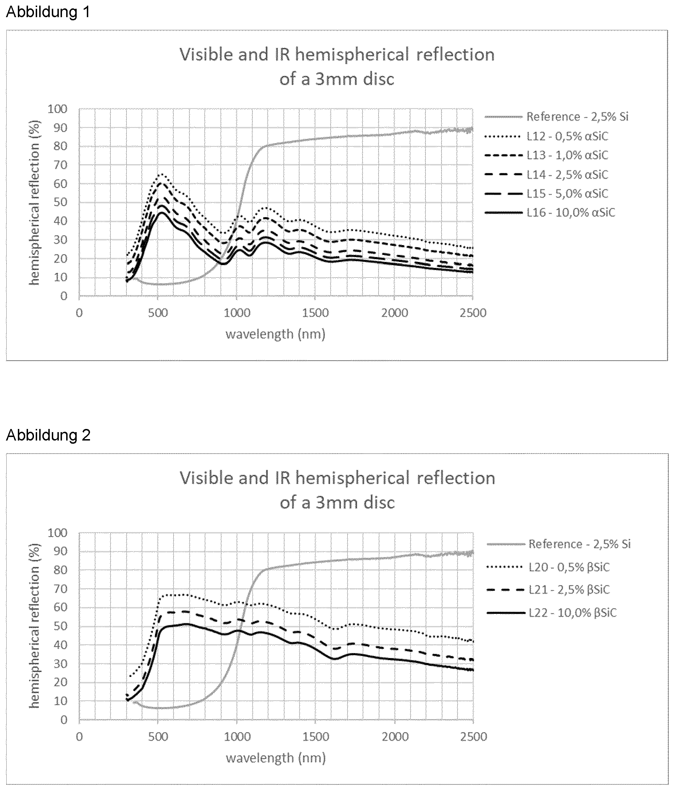

Abbildung 1 zeigt die hemisphärische Reflexion im sichtbaren Bereich und die hemisphärische Reflexion im IR-Bereich von 3 mm dicken Kompositwerkstoffen, die keine Siliziumcarbid-enthaltende Phase umfassen und die Siliziumcarbid-enthaltende Phasen mit unterschiedlichen Mengen an α-Siliziumcarbid umfassen.

Abbildung 2 zeigt die hemisphärische Reflexion im sichtbaren Bereich und die hemisphärische Reflexion im IR-Bereich von 3 mm dicken Kompositwerkstoffen, die keine Siliziumcarbid-enthaltende Phase umfassen und die Siliziumcarbid-enthaltende Phasen mit unterschiedlichen Mengen an β-Siliziumcarbid umfassen.

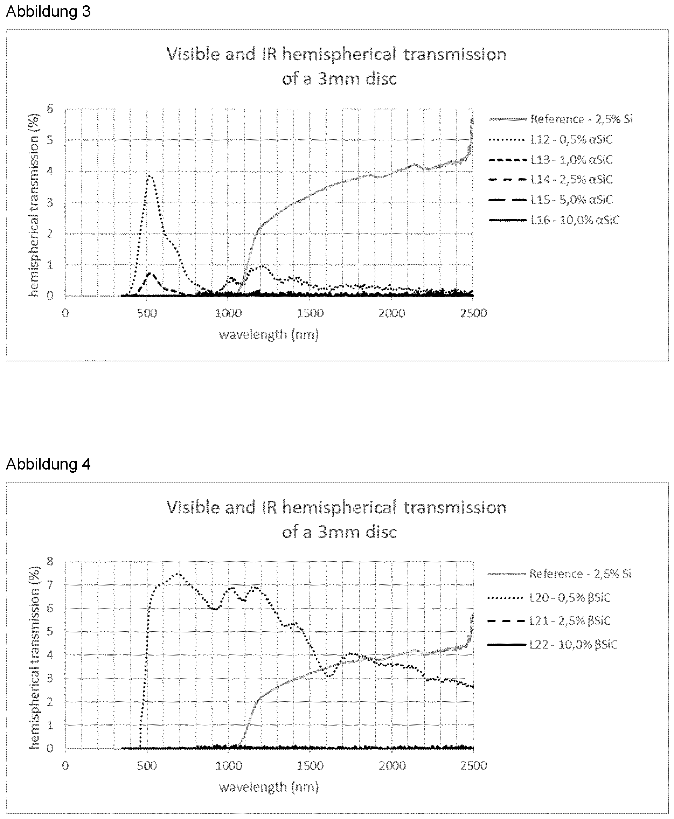

Abbildung 3 zeigt die hemisphärische Transmission im sichtbaren Bereich und die hemisphärische Reflexion im IR-Bereich von 3 mm dicken Kompositwerkstoffen, die keine Siliziumcarbid-enthaltende Phase umfassen und die Siliziumcarbid-enthaltende Phasen mit unterschiedlichen Mengen an α-Siliziumcarbid umfassen.

Abbildung 4 zeigt die hemisphärische Transmission im sichtbaren Bereich und die hemisphärische Reflexion im IR-Bereich von 3 mm dicken Kompositwerkstoffen, die keine Siliziumcarbid-enthaltende Phase umfassen und die Siliziumcarbid-enthaltende Phasen mit unterschiedlichen Mengen an β-Siliziumcarbid umfassen.

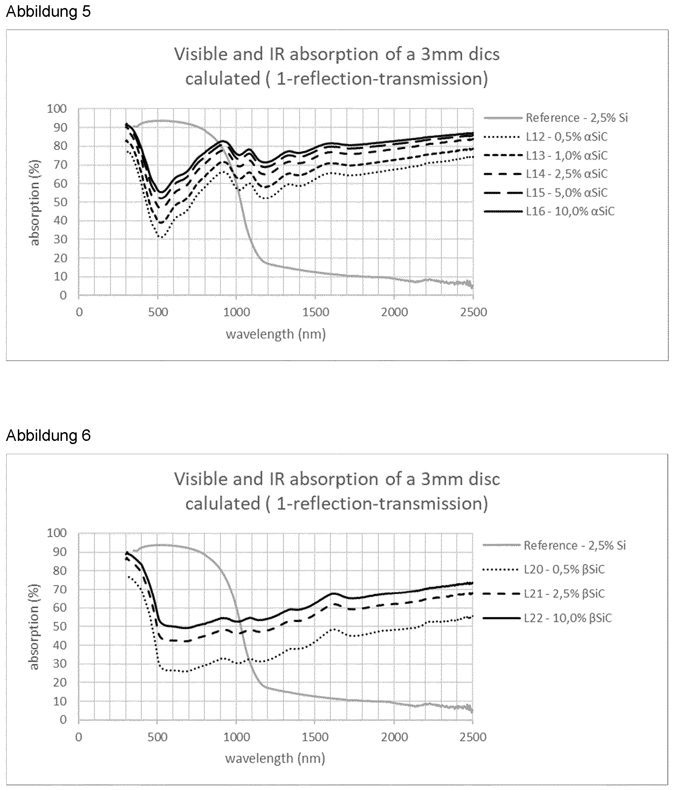

Abbildung 5 zeigt die berechnete hemisphärische Absorption im sichtbaren Bereich und die berechnete hemisphärische Absorption im IR-Bereich von 3 mm dicken Kompositwerkstoffen, die keine Siliziumcarbid-enthaltende Phase umfassen und die Siliziumcarbid-enthaltende Phasen mit unterschiedlichen Mengen an α-Siliziumcarbid umfassen.

Abbildung 6 zeigt die berechnete hemisphärische Absorption im sichtbaren Bereich und die berechnete hemisphärische Absorption im IR-Bereich von 3 mm dicken Kompositwerkstoffen, die keine Siliziumcarbid-enthaltende Phase umfassen und die Siliziumcarbid-enthaltende Phasen mit unterschiedlichen Mengen an β-Siliziumcarbid umfassen.

Die Abbildungen 1 und 2 zeigen, dass die erfindungsgemäßen Kompositwerkstoffe eine Abnahme der hemisphärischen Reflexion bei Wellenlängen oberhalb von ungefähr 1000 nm im Vergleich zu dem Kompositwerkstoff gemäß EP 3 068 739 A, welcher ohne siliziumcarbidenthaltender Phase hergestellt wurde, aufweisen.

Die Abbildungen 3 und 4 zeigen, dass die erfindungsgemäßen Kompositwerkstoffe eine äußerst geringe Durchlässigkeit für IR-Strahlung aufweisen, die deutlich unter der IR Durchlässigkeit des Kompositwerkstoffs gemäß EP 3 068 739 A, welcher ohne Siliziumcarbidenthaltender Phase hergestellt wurde, liegt.

Die Abbildungen 5 und 6 zeigen, dass die erfindungsgemäßen Kompositwerkstoffe eine hohe Absorption bei Wellenlängen oberhalb von ungefähr 1000 nm im Vergleich zu dem Kompositwerkstoff gemäß EP 3 068 739 A, welcher ohne siliziumcarbidenthaltender Phase hergestellt wurde, aufweisen.

Die Abbildung 7 zeigt den Emissionsgrad bei erhöhten Temperaturen für einen erfindungsgemäßen Kompositwerkstoff mit 2,5 Gew.-% α-Siliziumcarbid bei unterschiedlichen Temperaturen von 500 °C, 750 °C und 1000 °C.

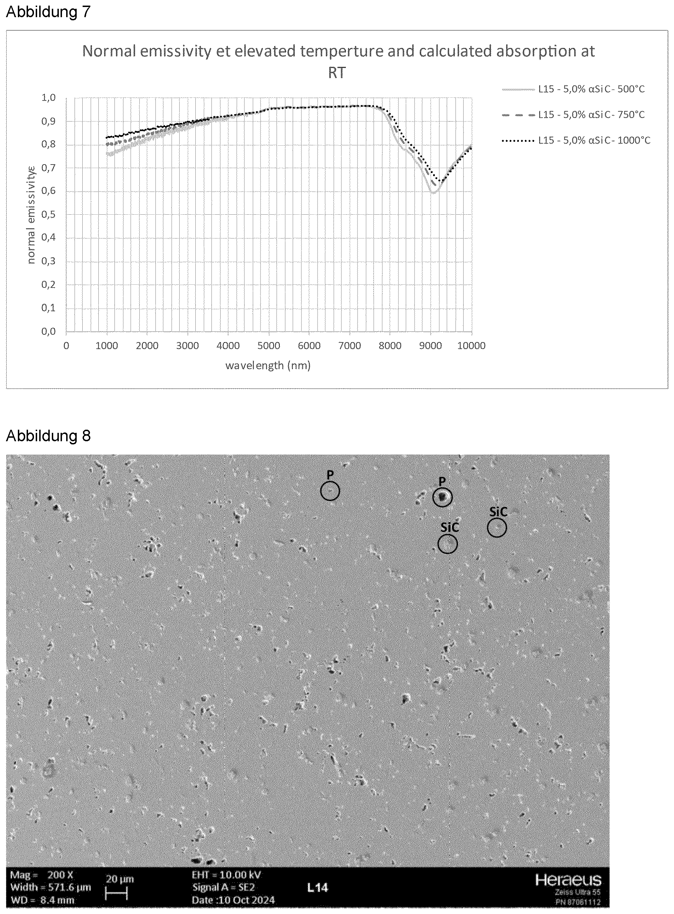

Aus Abbildung 7 ist ersichtlich, dass der Emissionsgrad des erfindungsgemäßen Kompositwerkstoffs im Wellenlängenbereich von 1 - 5 μm mit steigender Temperatur bis über 0,8 bei 1000 °C anwächst Die temperaturabhängige Schwankung des Emissionsgrades ist allerdings sehr gering.

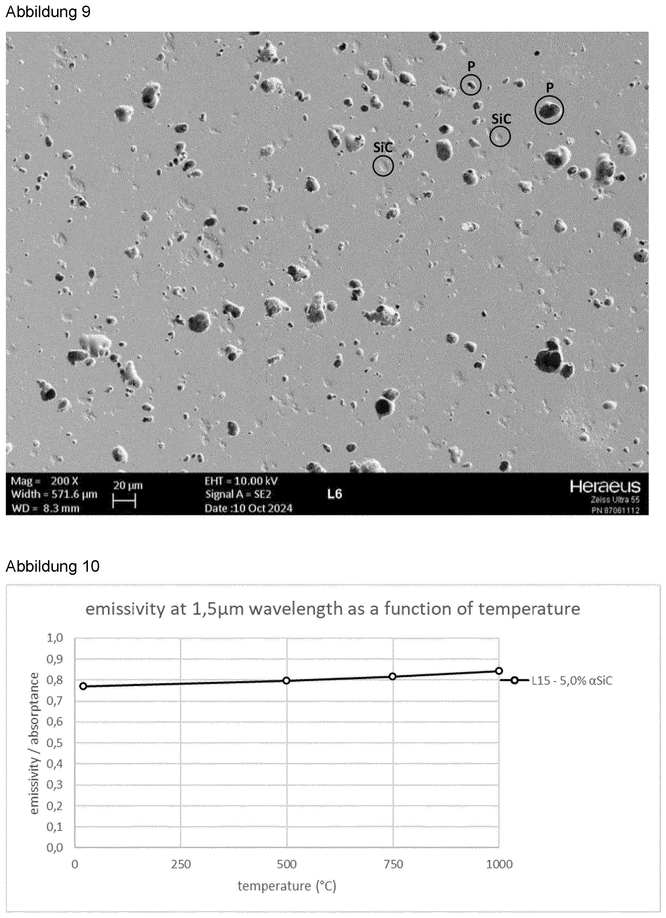

Das Absorptionsvermögen bei hohen Temperaturen der erfindungsgemäßen Kompositwerkstoffe wird über die Messung der Emissivität ermittelt. Das Temperaturverhalten des Absorptionsvermögens einer Probe mit 2,5 Gew.-% Siliziumcarbid im nahen Infrarot bei 1,5 μm Wellenlänge zeigt die Abbildung 10 sowie die nachfolgende Tabelle 2.

Die Abbildung 8 zeigt eine REM-Aufnahme einer Querschnittsfläche eines erfindungsgemäßen Kompositwerkstoffes mit 2,5 Gew.-% Siliziumcarbid, welcher für 5 Stunden bei 1390 °C gesintert wurde. P kennzeichnet eine Pore und SiC in die Quarzglasmatrix eingebettete SiC-Partikel.

Die Abbildung 9 zeigt eine REM-Aufnahme einer Querschnittsfläche eines erfindungsgemäßen Kompositwerkstoffes mit 2,5 Gew.-% Siliziumcarbid, welcher für 10 Stunden bei 1390 °C gesintert wurde. P kennzeichnet eine Pore und SiC in die Quarzglasmatrix eingebettete SiC-Partikel.

Die Abbildungen 8 und 9 zeigen, dass die erfindungsgemäßen Kompositwerkstoffe eine geringe erfindungsgemäße Porosität aufweisen. Längeres Sintern erhöht die Porosität.

Tabelle 2

|  | Probe L15, 5,0% αSiC, 3mm disc |
|---|---|
| Temperatur | Emissionsgrad / Absorptionsgrad bei 1,5 μm |
| 20 °C | 0,77 |
| 500 °C | 0,80 |
| 750 °C | 0,82 |
| 1000 °C | 0,84 |
| Erhöhung von 20 bis 1000 °C | 0,07 |

**Patentansprüche**

1. Kompositwerkstoff mit einer Matrix aus Quarzglas, in die Bereiche aus Siliziumcarbidenthaltender Phase eingebettet sind.

2. Kompositwerkstoff nach Anspruch 1, **dadurch gekennzeichnet, dass** der Kompositwerkstoff eine Absorption einer 3 mm dicken Scheibe bei 1500 nm von größer 40%, weiter bevorzugt größer 50 % aufweist.

3. Kompositwerkstoff nach Anspruch 1 oder 2, **dadurch gekennzeichnet, dass** der Kompositwerkstoff eine hemisphärische Reflexion einer 3 mm dicken Scheibe bei 1500 nm von kleiner 60%, weiter bevorzugt kleiner 50 %, aufweist.

4. Kompositwerkstoff nach einem der Ansprüche 1 bis 3, **dadurch gekennzeichnet, dass** der Kompositwerkstoff eine Transmission einer 3 mm dicken Scheibe von kleiner 10 %, weiter bevorzugt kleiner als 1 %, noch weiter bevorzugt kleiner als 0,6 %, im Wellenlängenbereich von 0,4 bis 2,5 $\mu$m aufweist.

5. Kompositwerkstoff nach einem der Ansprüche 1 bis 4, **dadurch gekennzeichnet, dass** der Kompositwerkstoff eine Änderung des Absorptionsvermögens / Emissivität einer 3 mm Scheibe bei 1,5 $\mu$m Wellenlänge zwischen Raumtemperatur (20 °C) und 1000 °C kleiner als 0,3, weiter bevorzugt kleiner 0,2, besonders bevorzugt kleiner 0,1, aufweist.

6. Kompositwerkstoff nach einem der Ansprüche 1 bis 5, **dadurch gekennzeichnet, dass** der Gewichtsanteil an Siliziumcarbid-enthaltender Phase, jeweils bezogen auf die Matrix aus Quarzglas, 0,25 bis 10 Gew.-%, weiter bevorzugt 0,5 bis 9 Gew.-%, noch weiter bevorzugt 1 bis 8 Gew.-%, noch weiter bevorzugt 1,5 bis 7 Gew.-%, noch weiter bevorzugt 2 bis 6 Gew.-%, noch weiter bevorzugt 2,5 bis 5 Gew.-%, beträgt.

7. Kompositwerkstoff nach einem der Ansprüche 1 bis 6, **dadurch gekennzeichnet, dass** die die Partikelgrößenverteilung d90 der Siliziumcarbid-Partikel kleiner 100 $\mu$m, weiter bevorzugt kleiner 75 $\mu$m, noch weiter bevorzugt kleiner 50 $\mu$m, beträgt.

8. Kompositwerkstoff nach einem der Ansprüche 1 bis 7, **dadurch gekennzeichnet, dass** die Kompositwerkstoff metallische Verunreinigungen von weniger als 100 ppm, weiter bevorzugt weniger als 50 ppm, noch weiter bevorzugt weniger als 25 ppm, aufweist, wobei die metallischen Verunreinigungen durch optische Emissionsspektroskopie mit induktiv gekoppeltem Plasma bestimmt werden.

9. Kompositwerkstoff nach einem der Ansprüche 1 bis 8, **dadurch gekennzeichnet, dass** der Kompositwerkstoff eine Porosität von weniger als 8 %, weiter bevorzugt weniger als 6 %, noch weiter bevorzugt weniger als 5 %, aufweist, wobei sich die Porosität als das Porenvolumen bezogen auf das Gesamtvolumen des Kompositwerkstoffs definiert ist.

10. Kompositwerkstoff nach einem der Ansprüche 1 bis 9, **dadurch gekennzeichnet, dass** der Kompositwerkstoff einen Kohlenstoffgehalt von weniger als 0,1 Gew.-%, weiter bevorzugt weniger als 0,075 Gew.-%, noch weiter bevorzugt weniger als 0,05 Gew.-%, jeweils bezogen auf das Gesamtgewicht des Kompositwerkstoffs, aufweist

11. Kompositwerkstoff nach einem der Ansprüche 1 bis 10, **dadurch gekennzeichnet, dass** der Kompositwerkstoff frei von Kohlenstoff ist.

12. Verfahren zur Herstellung des Kompositwerkstoffs nach einem der Ansprüche 1 bis 11, **gekennzeichnet durch** die nachfolgenden Verfahrensschritte:

    a. Bereitstellen einer Mischung, umfassend amorphe Quarzglaspartikel und ein siliziumcarbidhaltiges Pulver, als Suspension;
    b. Ausbilden eines Formkörpers mittels eines Schlickergussverfahrens ausgehend von der in Verfahrensschritt a. hergestellten Suspension unter Erhalt eines Grünkörpers;
    c. Trocknung des Grünkörpers; und
    d. Sintern des aus Verfahrensschritt c. resultierenden getrockneten Grünkörpers.

13. Verfahren nach Anspruch 12, **dadurch gekennzeichnet, dass** die Korngrößenverteilung der Quarzglaspartikel in der Suspension einen d90-Wert von kleiner als 100 $\mu$m, weiter bevorzugt kleiner als 75 $\mu$m, noch weiter bevorzugt kleiner als 50 $\mu$m, aufweist, jeweils bestimmt durch Laserbeugung gemäß ISO 2019:13320.

14. Verfahren nach 12 oder 13, **dadurch gekennzeichnet, dass** der Feststoffgehalt in der wässrigen Suspension aus Quarzglaspartikeln mehr als 50 Gew.-%, weiter bevorzugt mehr als 65 Gew.-%, noch weiter bevorzugt mehr als 75 Gew.-%, beträgt.

15. Verwendung eines Kompositwerkstoffs gemäß einem Ansprüche 1 bis 11 zur Herstellung eines Bauteils für Komponenten von Prozesskammern, in denen Halbleiterwafer zu Chips verarbeitet werden, für Anlagen, in denen Hochtemperaturprozesse durchgeführt werden, für Komponenten, die mittels Strahlung beheizt werden sowie für Komponenten, die Wärmestrahlung abblocken.

Abbildung 1

Visible and IR hemispherical reflection of a 3mm disc

Abbildung 2

Visible and IR hemispherical reflection of a 3mm disc

Abbildung 3

Visible and IR hemispherical transmission of a 3mm disc

Abbildung 4

Visible and IR hemispherical transmission of a 3mm disc

Abbildung 5

Visible and IR absorption of a 3mm dics
calulated ( 1-reflection-transmission)

Abbildung 6

Visible and IR absorption of a 3mm disc
calulated ( 1-reflection-transmission)

Abbildung 7

Normal emissivity et elevated temperture and calculated absorption at RT

Abbildung 8

Abbildung 9

Abbildung 10

emissivity at 1,5μm wavelength as a function of temperature

Europäisches
Patentamt

European
Patent Office

Office européen
des brevets

# EUROPÄISCHER RECHERCHENBERICHT

Nummer der Anmeldung

**EP 24 21 0179**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 355 587 B1 (LOXLEY TED A [US] ET AL) 12. März 2002 (2002-03-12) * Spalte 31, Zeilen 44-50; Ansprüche; Beispiele * ----- | 1-15 | INV. C03C14/00 C03B19/06 |
| X | JP H05 170477 A (TOSOH CORP; NIPPON SEKIEI GLASS KK) 9. Juli 1993 (1993-07-09) * das ganze Dokument * ----- | 1-10, 12-15 | |
| X | US 2001/025001 A1 (ODA TOSHIO [JP] ET AL) 27. September 2001 (2001-09-27) * Absätze [0035] - [0043]; Ansprüche; Beispiele * ----- | 1-11,15 | |
| X | JP H06 122533 A (TOSOH CORP) 6. Mai 1994 (1994-05-06) * das ganze Dokument * ----- | 1-11,15 | |

RECHERCHIERTE
SACHGEBIETE (IPC)

C03C
C03B

Der vorliegende Recherchenbericht wurde für alle Patentansprüche erstellt

| Recherchenort | Abschlußdatum der Recherche | Prüfer |
|---|---|---|
| München | 4. April 2025 | Wrba, Jürgen |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 21 0179

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2025

| Im Recherchenbericht angeführtes Patentdokument | Datum der Veröffentlichung | Mitglied(er) der Patentfamilie | Datum der Veröffentlichung |
|---|---|---|---|
| US 6355587 B1 | 12-03-2002 | KEINE | |
| JP H05170477 A | 09-07-1993 | JP 3112111 B2<br>JP H05170477 A | 27-11-2000<br>09-07-1993 |
| US 2001025001 A1 | 27-09-2001 | KEINE | |
| JP H06122533 A | 06-05-1994 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3068739 A
- US 2001025001 A
- JP 2006027930 A
- JP H05170477 A
- US 5674792 A

**In der Beschreibung aufgeführte Nicht-Patentliteratur**

- **J. MANARA** ; **M. KELLER** ; **D. KRAUS** ; **M. ARDUINI-SCHUSTER**. DETERMINING THE TRANSMITTANCE AND EMITTANCE OF TRANSPARENT AND SEMITRANS-PARENT MATERIALS AT ELEVATED TEMPERATURES. *5th European Thermal-Sciences Conference, Niederlande*, 2008